# EUROPÄISCHE PATENTSCHRIFT

(11) **EP 4 174 337 B1**
(45) Veröffentlichungstag und Bekanntmachung des Hinweises auf die Patenterteilung: **28.08.2024**
(21) Anmeldenummer: 22199849.5
(22) Anmeldetag: 05.10.2022
(51) Int. Cl.: F16D 41/12

(54) **KUPPLUNGSEINRICHTUNG FÜR EINEN FAHRZEUGLÜFTER**
CLUTCH DEVICE FOR A VEHICLE FAN
DISPOSITIF D'ACCOUPLEMENT POUR UN VENTILATEUR DE VÉHICULE

(30) Priorität: 28.10.2021 DE 102021128076
(43) Veröffentlichungstag der Anmeldung: 03.05.2023
(73) Patentinhaber: Deere & Company, Moline, IL 61265 (US)
(72) Erfinder: RAKSHE, SANDEEP, 68163 Mannheim (DE); SANANIKONE, PHOUPHADETH, 68163 Mannheim (DE); ABHIJIT, ABHIJIT, 68163 Mannheim (DE)
(74) Vertreter: Dehnhardt, Florian Christopher

(56) Entgegenhaltungen:
- DE-A1- 102016 211 145
- US-A1- 2008 093 189
- US-A1- 2008 169 166
- US-B1- 9 121 461
- US-B2- 10 197 134
- US-B2- 8 776 915

## Beschreibung

Die Erfindung betrifft einen Fahrzeuglüfter für ein landwirtschaftliches Fahrzeug, mit einer Kupplungseinrichtung.

Eine derartige Kupplungseinrichtung für einen Fahrzeuglüfter ist beispielsweise in Form einer sogenannten Visco-Kupplung bekannt, bei der mit steigender Temperatur eines zu kühlenden Fahrzeugaggregats mittels eines Bimetallelements ein Ventil geöffnet wird, um zur Erhöhung des Kupplungsschlusses unter Druck stehende Hydraulikflüssigkeit in einen Arbeitsraum der Visco-Kupplung zu fördern. In der Folge steigt die Drehzahl eines über die Visco-Kupplung angetriebenen Lüfterrads und damit dessen Kühlleistung.

Ein Beispiel für diese Art von Kupplungssystemen findet sich in der US 9 121 461 B1. Ein Freilaufsystem zwischen einer Riemenscheibe un einer Nabe für Nebenaggregate in Verbrennungsmotoren ist in der US 2008/093189 A1 zu sehen.

Bei einfacheren Anwendungen ist die Verwendung einer Visco-Kupplung jedoch zu kostspielig und daher unüblich. Dies gilt insbesondere für den Fall der Kühlung von Verbrennungsmotoren in landwirtschaftlichen Traktoren vergleichsweise geringer Leistungsklassen. Hier erfolgt üblicherweise eine starre Kopplung zwischen einer Riemenscheibe eines von dem Verbrennungsmotor angetriebenen Riementriebs und einem Lüfterrad, das der Erzeugung eines einen Motorwärmetauscher beaufschlagenden Kühlluftstroms dient. Wird der Verbrennungsmotor abgestellt, so kommt der Riementrieb vergleichsweise rasch zum Stillstand. Das Lüfterrad neigt jedoch aufgrund seiner Masseträgheit dazu, sich für einen gewissen Zeitraum weiterzudrehen. Dies führt zu einem Durchdrehen der damit verbundenen Riemenscheibe entlang des stillstehenden Antriebsriemens und damit zu unerwünschtem Verschleiß sowie wahrnehmbaren Vibrationen bzw. Geräuschen.

Es ist daher Aufgabe, eine Kupplungseinrichtung der eingangs genannten Art dahingehend auszubilden, dass diese im Falle einer starren Antriebsverbindung zu einem verbesserten Verschleiß- und Geräuschverhaltens des Fahrzeuglüfters führt.

Diese Aufgabe wird durch einen Fahrzeuglüfter für ein landwirtschaftliches Fahrzeug mit den Merkmalen des Patentanspruchs 1 gelöst.

Der erfindungsgemäße Fahrzeuglüfter für ein landwirtschaftliches Fahrzeug, mit einer Kupplungseinrichtung umfasst neben einem antriebsseitigen Kupplungselement ein abtriebsseitiges Kupplungselement, wobei zwischen den beiden Kupplungselementen ein Sperrmechanismus derart ausgebildet ist, dass eine zwischen den Kupplungselementen hergestellte Drehverbindung freigegeben wird, wenn eine antriebsseitige Drehzahl gegenüber einer abtriebsseitigen Drehzahl abfällt.

Der so gebildete Freilauf kann ein Drehmoment nur in einer Drehrichtung übertragen. Im Falle gegensinniger Drehrichtungen der beiden Kupplungselemente zueinander, oder wenn die abtriebsseitige Drehzahl größer ist als die antriebsseitige Drehzahl, wird die Drehverbindung selbsttätig gelöst. Auf diese Weise lässt sich sicherstellen, dass ein mittels der Kupplungseinrichtung angetriebener Lüfterflügel auch bei einer Verlangsamung oder einem Stillstand des antriebsseitigen Kupplungselements rückwirkungsfrei weiterrotieren kann.

Erfindungsgemäß weist das antriebsseitige Kupplungselement eine mit einer Antriebswelle verbindbare Nabe auf, wobei entlang eines Außenumfangs der Nabe eine Vielzahl radial verschwenkbarer Sperrklauen angebracht ist, die zur Herstellung der Drehverbindung jeweils mittels eines Federelements in eine ausgelenkte Sperrstellung vorgespannt sind. Die Nabe weist insbesondere ein Innengewinde auf, in das sich die mit einer Riemenscheibe in Verbindung stehende Antriebswelle eines von einem Verbrennungsmotor antreibbaren Riementriebs einschrauben lässt.

In diesem Fall besteht die Möglichkeit, dass entlang eines Innenumfangs des abtriebsseitigen Kupplungselements eine Vielzahl von Kupplungsrampen zur Ineingriffnahme einer jeweiligen der Sperrklauen ausgebildet ist. Bei hergestellter Drehverbindung können die Sperrklauen mit einem stirnseitigen Ende an einem im Wesentlichen quer zur Drehrichtung verlaufenden Rampenende anliegen. Umgekehrt lassen sich die Sperrklauen zur Freigabe der Drehverbindung entlang einer Innenkontur der Kupplungsrampen entgegen der mittels des jeweiligen Federelements erzeugten Vorspannung aus der ausgelenkten Sperrstellung heraus radial nach innen wegdrängen. Die Sperrklauen können einen gebogenen Verlauf derart aufweisen, dass diese jeweils in einem Schulterbereich an der Innenkontur der Kupplungsrampen anliegen. Aufgrund der so geschaffenen Vergrößerung des Anlagefläche kann im Freilaufbetrieb ein reibungsbedingter Verschleiß von Sperrklauen und Kupplungsrampen maßgeblich verringert werden. Beide Teile bestehen hierbei typischerweise aus oberflächengehärtetem Stahl.

Zusätzlich ist es möglich, dass die Anzahl der Kupplungsrampen derjenigen der Sperrklauen entspricht oder ein Vielfaches davon beträgt. Typischerweise sind insgesamt 4 bis 5 Sperrklauen bzw. Kupplungsrampen gleichmäßig entlang des Außenumfangs der Nabe bzw. des Innenumfangs des abtriebsseitigen Kupplungselements verteilt angeordnet. Die genaue Anzahl der Sperrklauen hängt dabei letztlich von den mittels der Kupplungseinrichtung zu übertragenden Drehmomenten ab.

An dem abtriebsseitigen Kupplungselement kann ein Befestigungsflansch zur Montage eines Lüfterrads ausgebildet sein. Das in der Regel aus faserverstärktem Kunststoff bestehende Lüfterrad umfasst eine Vielzahl von Lüfterflügeln, die der Erzeugung eines axialen oder radialen Kühlluftstroms dienen. Das Lüfterrad lässt sich hierbei mittels einer Befestigungsnabe mit einem an dem Befestigungsflansch vorgesehenen Lochkranz verschrauben.

Das antriebsseitige Kupplungselement ist insbesondere mittels eines Rillenkugellagers innerhalb des abtriebsseitigen Kupplungselements drehbar aufgenommen. Das Rillenkugellager umfasst üblicherweise einen inneren und einen äußeren Laufring. Der äußere Laufring kann in eine an dem abtriebsseitigen Kupplungselement ausgebildete Aufnahmeöffnung eingesetzt und darin mittels eines Sicherungsrings, der in eine an der Aufnahmeöffnung umlaufende Innennut eingreift, im Wesentlichen spielfrei festgelegt sein. Der innere Laufring hingegen kann auf einen an der Nabe ausgebildeten Befestigungsvorsprung aufgesteckt sein und dort an einem umlaufenden Kragen anliegen. Auf der dem Kragen gegenüberliegenden Seite des Rillenkugellagers kann sich ein in eine umlaufende Außennut am Befestigungsvorsprung eingreifender weiterer Sicherungsring befinden, der das Rillenkugellager im Wesentlichen spielfrei auf der dem Befestigungsvorsprung festlegt.

Der erfindunsgemäße Fahrzeuglüfter, für ein landwirtschaftliches Fahrzeug, mit einer Kupplungseinrichtung. wird im Folgenden anhand der beigefügten Zeichnungen näher erläutert. Dabei beziehen sich identische Bezugszeichen auf übereinstimmende oder bezüglich ihrer Funktion vergleichbare Komponenten. Es zeigen:
- Fig. 1: eine Explosionsdarstellung der Bestandteile eines Ausführungsbeispiels des erfindungsgemäßen Fahrzeuglüfter, für ein landwirtschaftliches Fahrzeug, mit einer Kupplungseinrichtung.
- Fig. 2: eine Ansicht der Kupplungseinrichtung gemäß Fig. 1 in zusammengebautem Zustand bei hergestellter Drehverbindung,
- Fig. 3: eine Ansicht der in Fig. 2 wiedergegebenen Kupplungseinrichtung bei gelöster Drehverbindung, und
- Fig. 4: eine Schnittdarstellung des Fahrzeuglüfter, für ein landwirtschaftliches Fahrzeug, mit einer Kupplungseinrichtung.

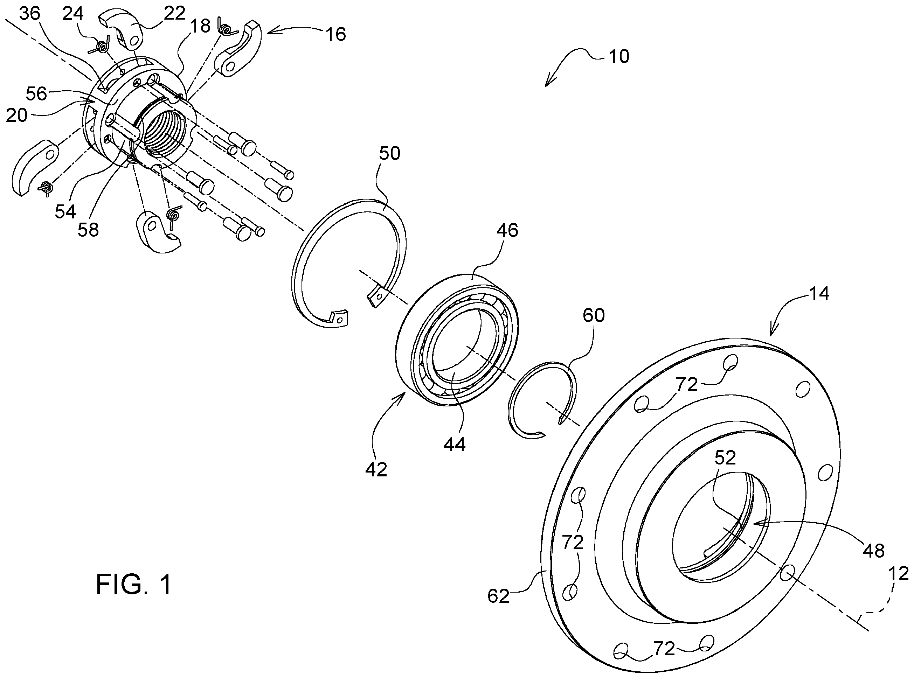

Fig. 1 zeigt in einer Explosionsdarstellung die Bestandteile eines Ausführungsbeispiels des erfindungsgemäßen Fahrzeuglüfter mit einer Kupplungseinrichtung.

Die Kupplungseinrichtung 10 umfasst entlang einer gemeinsamen Drehachse 12 ein antriebsseitiges Kupplungselement 14 sowie ein abtriebsseitiges Kupplungselement 16.

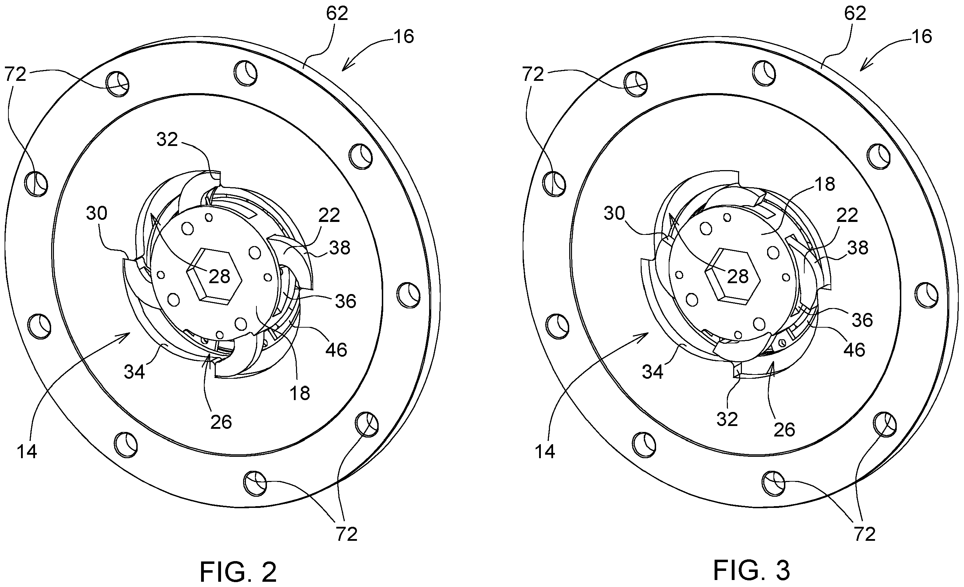

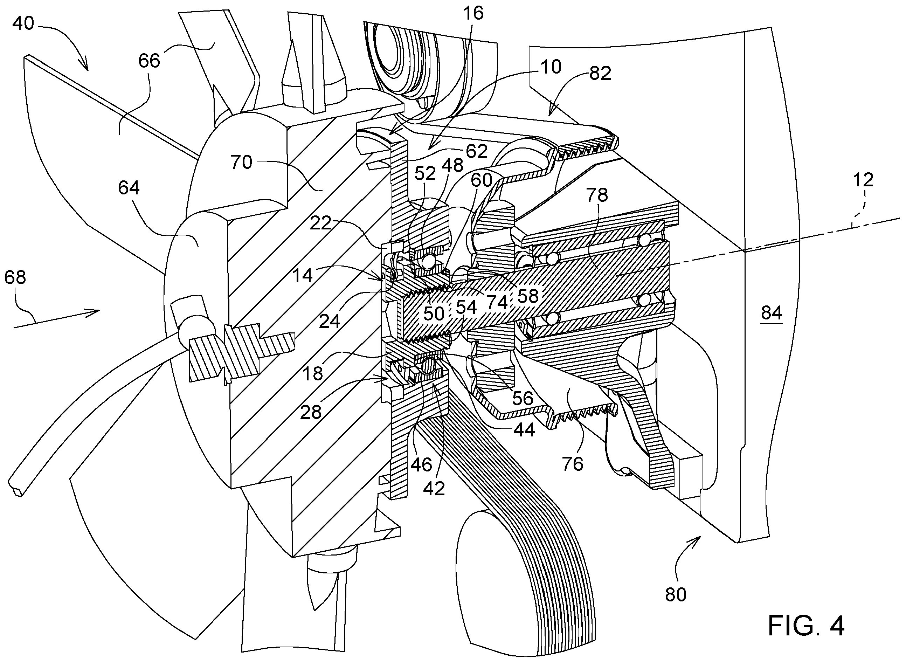

Das antriebsseitige Kupplungselement 14 weist eine Nabe 18 auf (siehe hierzu auch Fig. 4). Entlang eines Außenumfangs 20 der Nabe 18 ist eine Vielzahl radial verschwenkbarer Sperrklauen 22 angebracht, die jeweils mittels eines Federelements 24 in eine in Fig. 2 wiedergegebene ausgelenkte Sperrstellung vorgespannt sind, sodass sich eine Drehverbindung zwischen den beiden Kupplungselementen 14, 16 herstellen lässt.

Hierzu ist entlang eines Innenumfangs 26 des abtriebsseitigen Kupplungselements 16 eine Vielzahl von Kupplungsrampen 28 zur Ineingriffnahme einer jeweiligen der Sperrklauen 22 ausgebildet. Wie in Fig. 2 zu erkennen ist, liegen bei hergestellter Drehverbindung die Sperrklauen 22 mit einem stirnseitigen Ende 30 an einem im Wesentlichen quer zur Drehrichtung verlaufenden Rampenende 32 an.

Umgekehrt lassen sich die Sperrklauen 22 zur Freigabe der Drehverbindung entlang einer Innenkontur 34 der Kupplungsrampen 28 entgegen der mittels des jeweiligen Federelements 24 erzeugten Vorspannung aus der ausgelenkten Sperrstellung heraus radial nach innen wegdrängen, wobei diese zumindest teilweise von einer jeweiligen Ausnehmung 36 entlang des Außenumfangs 20 der Nabe 18 aufgenommen werden. Dies ist beispielsweise bei gegensinnigen Drehrichtungen der beiden Kupplungselemente 14, 16 zueinander oder aber dann der Fall, wenn die abtriebsseitige Drehzahl größer ist als die antriebsseitige Drehzahl. Ein derartiger Freilaufbetrieb ist in Fig. 3 gezeigt. Im Ergebnis überträgt die Kupplungseinrichtung 10, genauer gesagt der durch die Sperrklauen 22 bzw. die Kupplungsrampen 28 gebildete Sperrmechanismus, ein Drehmoment nur in der vorgegebenen Drehrichtung.

Vorliegend entspricht die Anzahl der Kupplungsrampen 28 derjenigen der Sperrklauen 22. Alternativ kann diese jedoch auch ein Vielfaches davon betragen. Beispielsgemäß sind insgesamt 4 Sperrklauen 22 bzw. Kupplungsrampen 28 gleichmäßig entlang des Außenumfangs 20 der Nabe 18 bzw. des Innenumfangs 26 des abtriebsseitigen Kupplungselements 16 verteilt angeordnet. Zusätzlich weisen die Sperrklauen 22 einen bezüglich des Außenumfangs 20 der Nabe 18 tangential gebogenen Verlauf derart auf, dass diese jeweils in einem Schulterbereich 38 an der Innenkontur 34 der Kupplungsrampen 28 anliegen. Aufgrund der so geschaffenen Vergrößerung des Anlagefläche kann im Freilaufbetrieb ein reibungsbedingter Verschleiß von Sperrklauen 22 und Kupplungsrampen 28 maßgeblich verringert werden. Beide Teile bestehen hierbei aus oberflächengehärtetem Stahl.

Fig. 4 zeigt ferner eine Schnittdarstellung der Kupplungseinrichtung 10 in an dem erfindungsgemäßen Fahrzeuglüfter 40 eingebautem Zustand. Wie sich durch Vergleich mit Fig. 1 erkennen lässt, ist das antriebsseitige Kupplungselement 14 mittels eines Rillenkugellagers 42 innerhalb des abtriebsseitigen Kupplungselements 16 drehbar aufgenommen.

Das Rillenkugellager 42 umfasst einen inneren Laufring 44 und einen äußeren Laufring 46. Der äußere Laufring 46 ist in eine an dem abtriebsseitigen Kupplungselement 16 ausgebildete Aufnahmeöffnung 48 eingesetzt und darin mittels eines Sicherungsrings 50, der in eine an der Aufnahmeöffnung 48 umlaufende Innennut 52 eingreift, im Wesentlichen spielfrei festgelegt. Der innere Laufring 44 hingegen ist auf einen an der Nabe 18 ausgebildeten Befestigungsvorsprung 54 aufgesteckt und liegt dort an einem umlaufenden Kragen 56 an. Auf der dem Kragen 56 gegenüberliegenden Seite des Rillenkugellagers 42 befindet sich ein in eine umlaufende Außennut 58 am Befestigungsvorsprung 54 eingreifender weiterer Sicherungsring 60, der das Rillenkugellager 42 im Wesentlichen spielfrei auf dem Befestigungsvorsprung 54 festlegt.

An dem abtriebsseitigen Kupplungselement 16 ist ein Befestigungsflansch 62 zur Montage eines in Fig. 4 gezeigten Lüfterrads 64 ausgebildet. Das aus faserverstärktem Kunststoff bestehende Lüfterrad 64 umfasst eine Vielzahl von Lüfterflügeln 66, die der Erzeugung eines axialen Kühlluftstroms 68 dienen. Das Lüfterrad 64 ist mittels einer Befestigungsnabe 70 mit einem an dem Befestigungsflansch 62 vorgesehenen Lochkranz 72 verschraubt.

Die von dem antriebsseitigen Kupplungselement 14 umfasste Nabe 18 weist ein Innengewinde 74 auf, in das eine mit einer Riemenscheibe 76 in Verbindung stehende Antriebswelle 78 eingeschraubt ist, sodass Nabe 18 und Antriebswelle 78 miteinander drehverbunden sind. Die Riemenscheibe 76 ist Bestandteil eines von einem Verbrennungsmotor 80 antreibbaren Riementriebs 82, der sich im Motorraum 84 eines nicht dargestellten landwirtschaftlichen Fahrzeugs, beispielsweise eines landwirtschaftlichen Traktors, befindet.

## Patentansprüche

1. Fahrzeuglüfter für ein landwirtschaftliches Fahrzeug, mit einer Kupplungseinrichtung (10), umfassend ein antriebsseitiges Kupplungselement (14) und ein abtriebsseitiges Kupplungselement (16), wobei das antriebsseitige Kupplungselement (14) eine Nabe (18) aufweist, **dadurch gekennzeichnet, dass** entlang eines Außenumfangs (20) der Nabe (18) eine Vielzahl radial verschwenkbarer Sperrklauen (22) angebracht ist, die jeweils mittels eines Federelements (24) in eine ausgelenkte Sperrstellung vorgespannt sind, sodass sich eine Drehverbindung zwischen den beiden Kupplungselementen (14, 16) herstellen lässt, wobei entlang eines Innenumfangs (26) des abtriebsseitigen Kupplungselements (16) eine Vielzahl von Kupplungsrampen (28) zur Ineingriffnahme einer jeweiligen der Sperrklauen (22) vorgesehen ist, sodass zwischen den beiden Kupplungselementen (14, 16) ein Sperrmechanismus (22, 28) derart ausgebildet ist, dass eine zwischen den Kupplungselementen (14, 16) hergestellte Drehverbindung freigegeben wird, wenn eine antriebsseitige Drehzahl gegenüber einer abtriebsseitigen Drehzahl abfällt.

2. Fahrzeuglüfter nach Anspruch 1, **dadurch gekennzeichnet, dass** die Anzahl der Kupplungsrampen (28) derjenigen der Sperrklauen (22) entspricht oder ein Vielfaches davon beträgt.

3. Fahrzeuglüfter nach Anspruch 1 oder 2, **dadurch gekennzeichnet, dass** an dem abtriebsseitigen Kupplungselement (16) ein Befestigungsflansch (62) zur Montage eines Lüfterrads (64) ausgebildet ist.

4. Fahrzeuglüfter nach wenigstens einem der vorhergehenden Ansprüche, **dadurch gekennzeichnet, dass** das antriebsseitige Kupplungselement (14) mittels eines Rillenkugellagers (42) innerhalb des abtriebsseitigen Kupplungselements (16) drehbar aufgenommen ist.

## Claims

1. Vehicle fan for an agricultural vehicle, with a clutch device (10), comprising a drive-side clutch element (14) and an output-side clutch element (16), the drive-side clutch element (14) having a hub (18), **characterized in that** a multiplicity of radially pivotable locking claws (22) are attached along an outer circumference (20) of the hub (18), which locking claws are preloaded in each case by means of a spring element (24) into a deflected locking position, with the result that a rotational connection can be established between the two clutch elements (14, 16), a multiplicity of clutch ramps (28) for engagement with a respective one of the locking claws (22) being provided along an inner circumference (26) of the output-side clutch element (16), with the result that the locking mechanism (22, 28) is configured between the two clutch elements (14, 16) in such a way that a rotational connection which is established between the clutch elements (14, 16) is released if a drive-side rotational speed drops with respect to an output-side rotational speed.

2. Vehicle fan according to Claim 1, **characterized in that** the number of clutch ramps (28) corresponds to that of the locking claws (22) or is a multiple thereof.

3. Vehicle fan according to Claim 1 or 2, **characterized in that** a fastening flange (62) for mounting a fan wheel (64) is configured on the output-side clutch element (16) .

4. Vehicle fan according to at least one of the preceding claims, **characterized in that** the drive-side clutch element (14) is received rotatably within the output-side clutch element (16) by means of a deep groove ball bearing (42).

## Revendications

1. Ventilateur de véhicule pour un véhicule agricole, avec un dispositif d'accouplement (10), comprenant un élément d'accouplement côté entraînement (14) et un élément d'accouplement côté sortie (16), l'élément d'accouplement côté entraînement (14) présentant un moyeu (18), **caractérisé en ce que** le long d'une périphérie extérieure (20) du moyeu (18) est montée une pluralité de griffes de blocage (22) pouvant pivoter radialement, qui sont chacune précontraintes dans une position de blocage déviée au moyen d'un élément de ressort (24), de telle sorte qu'une liaison rotative peut être établie entre les deux éléments d'accouplement (14, 16), une pluralité de rampes d'accouplement (28) étant prévues le long d'une périphérie intérieure (26) de l'élément d'accouplement côté sortie (16) pour s'engager avec l'une respective des griffes de blocage (22), de telle sorte qu'un mécanisme de blocage (22, 28) est réalisé entre les deux éléments d'accouplement (14, 16) de telle sorte qu'une liaison rotative établie entre les éléments d'accouplement (14, 16) est libérée lorsqu'une vitesse de rotation côté entraînement chute par rapport à une vitesse de rotation côté sortie.

2. Ventilateur de véhicule selon la revendication 1, **caractérisé en ce que** le nombre de rampes d'accouplement (28) correspond à celui des griffes de blocage (22) ou est un multiple de celui-ci.

3. Ventilateur de véhicule selon la revendication 1 ou 2, **caractérisé en ce qu'**une bride de fixation (62) est réalisée sur l'élément d'accouplement (16) côté sortie pour le montage d'une roue de ventilateur (64).

4. Ventilateur de véhicule selon au moins l'une quelconque des revendications précédentes, **caractérisé en ce que** l'élément d'accouplement côté entraînement (14) est reçu de manière rotative à l'intérieur de l'élément d'accouplement côté sortie (16) au moyen d'un roulement rainuré à billes (42).
